(19) Europäisches Patentamt / European Patent Office / Office européen des brevets

(11) **EP 2 790 146 A1**

(12) **EUROPEAN PATENT APPLICATION**

(43) Date of publication:
**15.10.2014 Bulletin 2014/42**

(51) Int Cl.:
**G06Q 20/40** (2012.01)

(21) Application number: **14164286.8**

(22) Date of filing: **10.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.04.2013 US 201313860449**

(71) Applicant: **Fair Isaac Corporation San Jose, CA 95110 (US)**

(72) Inventors:
• **Zoldi, Scott Michael**
  **San Diego, CA 92129 (US)**
• **Betin, Alexei**
  **San Diego, CA 92121 (US)**
• **Marver, David Frank**
  **Carlsbad, CA 92008 (US)**

(74) Representative: **Mintz Levin Cohn Ferris Glovsky and Popeo LLP**
  **Alder Castle**
  **10 Noble Street**
  **London EC2V 7JX (GB)**

(54) **Reduced fraud customer impact through purchase propensity**

(57) A method, system and computer program product for reduced fraud customer impact through purchase propensity is disclosed. A probability estimate of spending by a consumer in a merchant transaction category is computed based on historical transaction data and consumer profile data, and a propensity score for the merchant transaction is generated. The propensity score represents a propensity for the consumer to conduct the merchant transaction. The propensity score is combined in a fraud model operating in a real-time transaction stream. The fraud score can be adjusted in accordance with the propensity score.

FIG. 1

EP 2 790 146 A1

**Description**

**TECHNICAL FIELD**

The subject matter described herein relates to fraud detection, and more particularly to reduced fraud customer impact through purchase propensity.

**BACKGROUND**

The banking industry is increasingly focused on improving customer experience with their products. Ease of access to the payment instruments and accounts owned by the customer is paramount to enabling ease of use of the accounts, maximizing transaction dollar volume and "wallet share," or market share, while minimizing risk of customer attrition. At the same time, banks are required to provide protection around these accounts to prevent fraud from occurring. Aggressive protection can sometimes result in fraud alerts that are false positives, and these may have a strong negative impact on customer experience.

In flagging transactions for fraud, banks often use analytic models that provide a score related to the probability that the transaction is fraud, and then apply a set of strategies to determine which transactions will be blocked or referred for processing. Customers who have had blocks on their cards are more likely to have a negative customer experience and switch to other payment methods for their purchases, causing a decline in dollars spent at their bank and leading to customer attrition. The need to reduce false positives for these clients is of great importance to the bank, in particular to prevent false positives that are considered 'obvious' to a human analyst (or customer) looking at the transaction history as opposed to a computer-based analytic model which summarizes the transaction stream to a set of fraud-predicting variables and has a limited view into the transaction history for the purposes of building the best fraud detection model with minimal false positives while returning the score in tens of milliseconds or less. These variables are typically compared in a transaction profile to a developed baseline of normal behavior for the customer, fraud profiles, and changes in behavior.

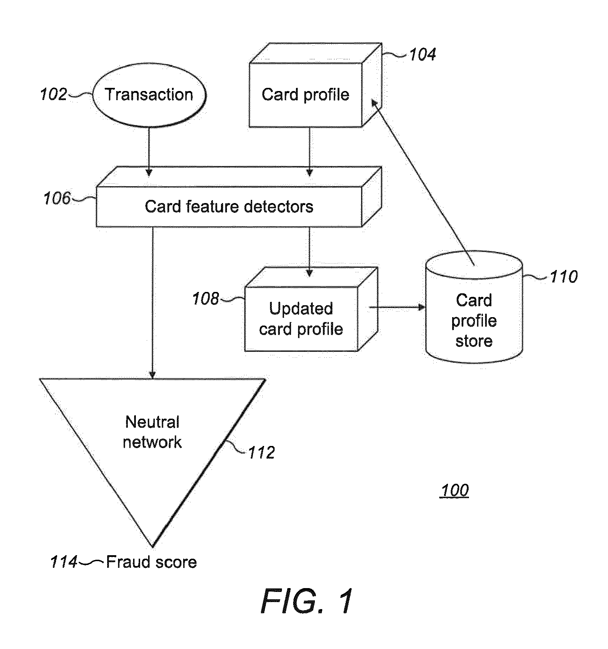

FIG. 1 shows a conventional fraud detection system 100 and its model components, for detecting fraud in one or more transactions 102 conducted with a transaction payment instrument, such as a credit card or other transaction card, by a cardholder. One example of such a fraud detection system is the Falcon Fraud Manager by FICO Corporation of San Jose, CA. The fraud models of conventional systems utilize a card or cardholder profile 104 that is typically indexed, such as by a Primary Account Number (PAN). A cardholder profile is a continuously-updated set of real-time, recursive variables summarizing the transaction history of the card computed from a given current transaction and past transactions.

The fraud detection system can also utilize other profile types to enhance the accuracy of the fraud score associated with the current transaction. The cardholder profile 104 for fraud detection includes statistics describing transaction patterns of normal behavior, recent transaction anomalies trends, deviations from historical normal behavior for the cardholder as well as the entire customer base, as well as significant events. Transaction profiles are updated by every transaction, thereby making the card profile 102 unique to each cardholder based on their specific transaction history and thus enabling a real-time score 114 indicative of fraud on the card. When a transaction occurs, the transactional information can be used alongside the current cardholder profile 104 to generate a set of predictive features and an updated cardholder profile 108. The generated features are used to compute the score 114, such as by a neural network model 112, and used for updating the profile, which is later stored in a card profile datastore 110.

As banks continue to focus their efforts on improving customer experience through limiting strong negative experiences, the need to limit these negative experiences, such as improper card blocks, becomes an important part of creating fraud detection models. Particularly in the age of "Big Data," customers expect that models have a deep understanding of individual spending behaviors, although this poses some very significant challenges in the real-time decision timeframe in fraud detection systems for authorization of payments. In order to limit false positives, an understanding of the unique behavior of a specific cardholder becomes paramount and can be achieved by using offline processing to inform the streaming analytics where tens of milliseconds or less is afforded for making a real-time fraud decision.

However, fraud models employed by fraud detection systems today focus only on deviations from "normal" behavior. What is needed is a model, process and system that also takes into consideration a likelihood of the customer making a transaction in the first place.

**SUMMARY**

A method, system and computer program product for reduced fraud customer impact through purchase propensity is disclosed. In one aspect, a method or set of operations includes computing a probability estimate of spending by a consumer in a merchant transaction according to merchant transaction data and consumer profile data. The method further includes generating a propensity score for the merchant transaction based on the probability estimate of spending by the consumer, the propensity score representing a propensity for the consumer to conduct the merchant transaction. The method further includes combining the propensity score in a fraud model operating in a real-time transaction stream, with the fraud model generating a fraud score. The method further includes adjusting the fraud score in accordance with the propensity score, the fraud score representing a relative likelihood that the merchant transaction by the consumer is fraudulent.

Implementations of the current subject matter can include, but are not limited to, systems and methods consistent with and including one or more features as described, as well as articles that comprise a tangibly embodied machine-readable medium operable to cause one or more machines (e.g., computers, etc.) to result in operations described herein. Similarly, computer systems are also described that may include one or more processors and one or more memories coupled to the one or more processors. A memory, which can include a computer-readable storage medium, may include, encode, store, or the like one or more programs that cause one or more processors to perform one or more of the operations described herein. Computer implemented methods consistent with one or more implementations of the current subject matter can be implemented by one or more data processors residing in a single computing system or multiple computing systems. Such multiple computing systems can be connected and can exchange data and/or commands or other instructions or the like via one or more connections, including but not limited to a connection over a network (e.g. the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims. While certain features of the currently disclosed subject matter are described for illustrative purposes in relation to an enterprise resource software system or other business software solution or architecture, it should be readily understood that such features are not intended to be limiting. The claims that follow this disclosure are intended to define the scope of the protected subject matter.

## DESCRIPTION OF DRAWINGS

The accompanying drawings, which are incorporated in and constitute a part of this specification, show certain aspects of the subject matter disclosed herein and, together with the description, help explain some of the principles associated with the disclosed implementations. In the drawings,

FIG. 1 illustrates a conventional fraud detection system;

FIG 2 illustrates incorporation of batch propensity scores into a scoring flow of a fraud detection system;

FIG. 3 illustrates real-time propensity scores utilizing batch propensity vectors;

FIG. 4 illustrates an example of a propensity model construction;

FIG. 5 illustrates an example of propensity score generation;

FIG. 6 illustrates a vector of propensity scores for different spend categories;

FIG. 7 illustrates grouping of customers into subcategories;

FIG. 8 illustrates methods for constructing predictor and target variables for propensity models;

FIG. 9 illustrates using real-time propensity profiles to adjust a batch propensity vector database score; and

FIG. 10 illustrates using batch and real-time propensity vector databases to improve false positives in a fraud detection system.

When practical, similar reference numbers denote similar structures, features, or elements.

## DETAILED DESCRIPTION

This document describes reduced fraud customer impact through purchase propensity and the use of a propensity model. While fraud models focus on deviations from normal behavior, propensity models focus on the likelihood of a transaction being made. Therefore, a propensity model is different in its intent as it is not predicting normal transactions but likely transactions. For example, if there are transaction history indications related to a customer purchasing a new home, there may be a high level of propensity for that cardholder to spend in home improvement to fix the home. In another example, customers who extensively travel could have a high propensity to make transactions outside of their ZIP code and in areas having reputations as travel and entertainment areas. In yet another example, customers that execute large monthly transactions in education could be more likely to spend in sporting goods or groceries. In other words, by understanding, in detail, the previous spending of the customer over both long and short timescales, and the recency and frequency of these transactions, one can build a model to make a prediction of the probability of a customer making these transactions. In some implementations, propensity model scores are combined with traditional fraud model scores in a computer-implemented system and method to lower false positives for the clients.

Implementations described herein relate mainly to payment card fraud models, but the methods are equally applicable to any payment mechanism. A system and method as described herein can compute, both in a batch and a real-time mode, a probability estimate of spending in a given spending category. A spending category can, in general, be defined as product or product category, merchant or type of merchant, payment method or channel, geographical area such as country or postal code, spent amount, or some combination thereof. In typical card fraud models, the purchase authorization is scored for the probability of fraud, and item-level data (i.e., what exactly was purchased) is not in the authorization data. Accordingly, a system and method as described herein computes a probability estimate of spending at a particular merchant category code (MCC) combined with in vs. out of home area flag expressed as a propensity score. The propensity score on the MCC is then used in the fraud model operating in the real-time transaction stream to adjust the fraud score to reduce the estimated fraud risk if the propensity is high, and to increase the risk of fraud if the propensity is low. A real-time component update to the batch propensity score will be discussed in further detail below.

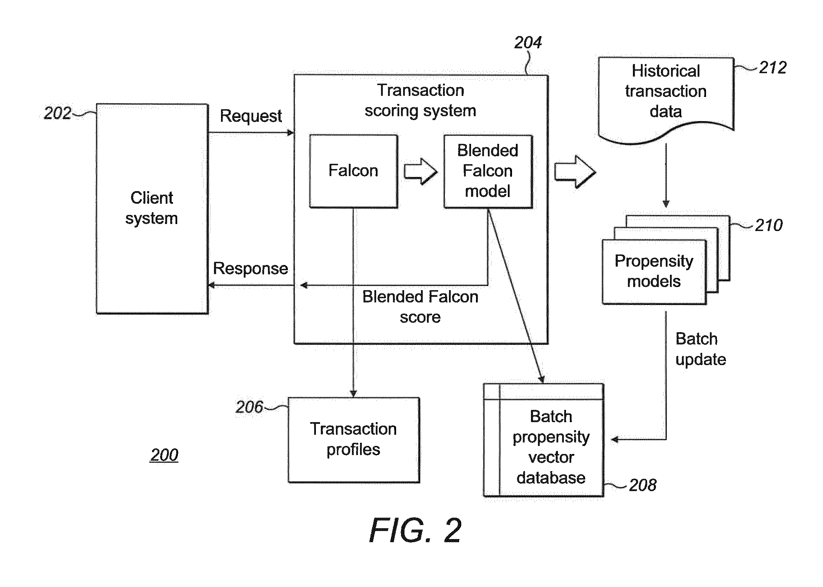

FIG. 2 illustrates using batch propensity scores into a scoring flow of a fraud scoring system 200. In some implementations, the fraud detection system 200 operates as follows. Transaction data for a transaction for a payment card is received by a transaction scoring system 204 from a client system 202. A transaction profile is retrieved from a transaction profile database 206 and profile variables are updated based on the current transaction and then used to generate predictive input variables used to produce a fraud score. A propensity vector database 208 is updated, in some implementations on a predetermined batch update schedule with propensity models 210 from historical transaction data 212. This propensity vector database 208 is also indexed by the card number (PAN) and the elements of the vector are the propensity scores for that cardholder in each of the MCC categories.

The fraud base model score is then blended with, or a second model is used to combine, the propensity scores retrieved from the propensity vector database with the fraud detection system score to produce an improved score. The propensity scores, described in further detail below, are produced by a different specialized propensity prediction model and are based on a much larger extent of historical transaction data 212 than normally available to a conventional real-time fraud model, which must minimize the extent of data utilized to generate the fraud score to enable real-time decisions.

The fraud scoring system 200 described above thus combines the real-time fraud score with a batch propensity score. The batch propensity score is based on very large transaction datastore that would not be accessed directly in a fraud detection production environment given that fraud decisions need to be made in real-time. The advantage of the fraud scoring system 200 illustrated in FIG. 2 is that it combines two very different data assets. The real-time fraud model focuses on a real-time summarization of the transaction stream into fraud features, and the propensity score provides a detailed look at the customer transaction history and types of customers to determine likely transactions. Thus, the streaming analytics of a conventional fraud model is periodically updated in the data stream with new, pertinent information to enable refined and improved fraud decisions. When the model accesses the propensity vectors for a customer, the model can utilize the raw propensity scores for MCC, or can create additional variables that can track real-time changes to propensity based on real-time scores and transaction history. The transaction history can be occurring in the stream between the scheduled batch updates of the propensity vectors, or on other schedules or timelines.

One of the tuning parameters in the fraud scoring system 200 is a batch update frequency. Tuning of the batch update frequency is dependent on a payment channel and the frequency of spending in the channel. As an example, a monthly batch update may be too infrequent as there are too many transactions occurring in the stream between propensity vector updates, thereby decreasing an accuracy of the propensity scores. On the other hand, too frequent updates, such as every few minutes, may not be operationally feasible due to the expense of updating the propensity vector database.

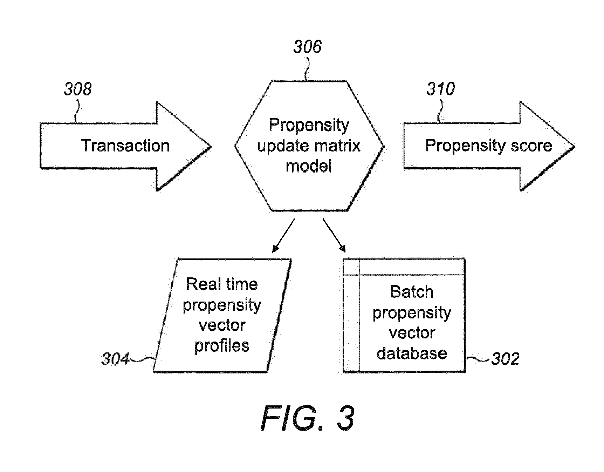

Accordingly, in some implementations, an approach is to have real-time adjustments to the static propensity scores, illustrated in FIG. 3, which demonstrates that the batch propensity vector database 302 can be supplemented with real-time propensity vector profiles 304 that form a propensity update matrix model 306. This model relies on batch updates of batch propensity vector database 302, and non-batch transaction propensity profiles 304. Each transaction propensity profile 304 records and summarizes spending that occurs for a particular payment card between batch updates. The model then utilizes the batch propensity vector 302 and transaction propensity vector 304 to adjust, in real-time, the values of the propensity for a merchant category code (MCC) of the transaction 308 that is currently being scored by a propensity score 310.

This approach takes into account situations in which a customer might have a high propensity for making an electronics purchase, but a much lowered probability of making two or more large electronics purchases during the batch period. In a situation where the batch updates are weekly, the real-time propensity profiles allow interim transactions to be reflected in the propensity scores to improve the accuracy of the propensity scores, resulting in a reduction in false positives. When the next batch update of the vector propensity matrix comes into the system, then the transaction propensity profiles are reset and the process repeats.

Computing the propensity of a transaction requires full transaction history over defined observation periods stored in an offline datastore which is used to compute the relationships between past spending and the probability of a transaction occurring within the subsequent future time-period. These propensities for payment card authorizations are most naturally based on the MCC, given the lack of ITEM level data in the typical payment card authorization process, but can be segmented more finely, such as using location information of the cardholder residence to understand spending such as MCC_IN_local area and MCC_OUT_of_tocal_area or further segment as MCC_OUT_of_local_area_more_than_$50, utilize item level information when available, etc. The definitions of these spending categories are used to refine the analytics based on the differences in spending in different MCC categories, as well as different meaningful binnings of dollar amount.

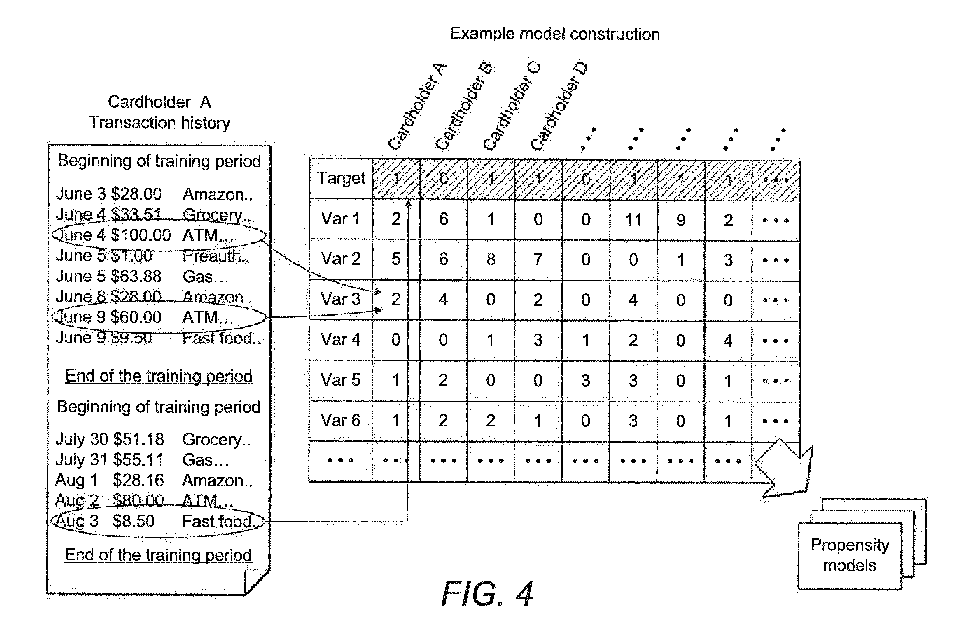

In some implementations, incorporating fraud propensity scores into the real-time stream includes developing batch propensity score models. FIG. 4 depicts a process 400 in which cardholder histories of transaction data are used to create a variable record. The variable record summarizes the recency and frequency of spending in different categories such as merchant category codes (MCC), dollar amount, international spend, within or outside zip code area spending, etc.

In some implementations, these variables can be based on a number of factors including variables defined using finite spans of a transaction history over various different ("short", "medium", and "long") timescales to enable creation of predictive variables associated with spending in the different categories in the next observation period. Training data is labeled based on whether a transaction in the target spending category occurred for the given customer during a certain performance period. For example, the fact of having a purchase with a particular MCC, particular MCC outside zip code area, particular MCC high dollar amount, etc. during the next 7 days, etc., may be used as a target label. Then, for each target a predictive model is constructed based on the variable records created by summarizing the transactions for each cardholder over an observation window. Different types of models can be used including but not limited to logistic regression, scorecard, or neural network. Given the large number of model targets, the models can be developed in parallel through parallelization of the model development process, or through use of analytics tools for large data structures, to allow for rapid creation of variable vectors and training of a large number of models for all defined spending categories in parallel. The system implementing the model construction shown in FIG. 4 is preferably a batch system which can update, on a regular interval, the variable records and the targets to train models for use in follow-on phases of the system operation. The development of the different propensity models in FIG. 4 is based on historical data based on known outcomes within a designated or predefined performance window. These models then form the basis for the batch scoring system. In some implementations, the system can include hundreds to thousands of models based on the number of propensity targets to be predicted, and the scoring system is well-suited for massively parallel batch scoring of customers through the use of data-intensive distributed computing platforms.

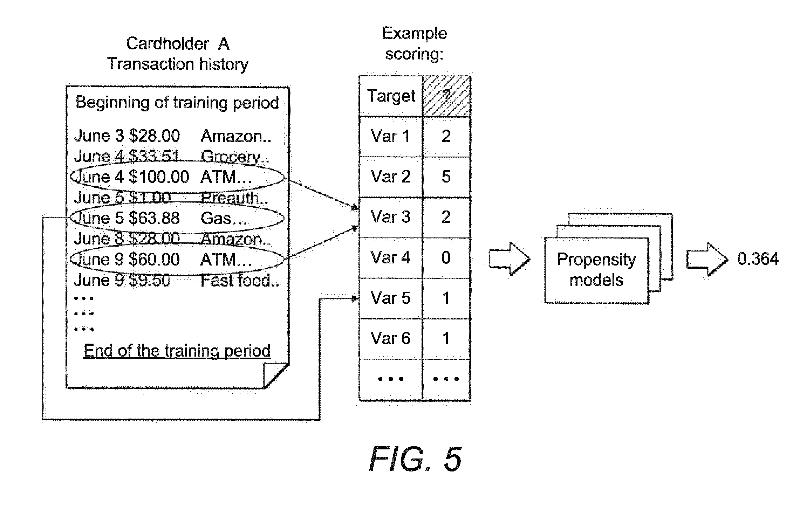

FIG. 5 illustrates an example of propensity score generation, in which batch propensity scoring proceeds through the creation of customer variable records to be scored to make a prediction of whether the customer would transact in a propensity category for a particular propensity model. As depicted in FIG. 5, once the variable record is constructed, the cardholder is scored by the models illustrated in FIG. 4, and a propensity to purchase in that category of spend is produced. As an example, a single customer might have hundreds to thousands of these propensities associated with their recent transaction history, which can be used to indicate a likelihood that a customer will make a transaction and spend in a particular spending category.

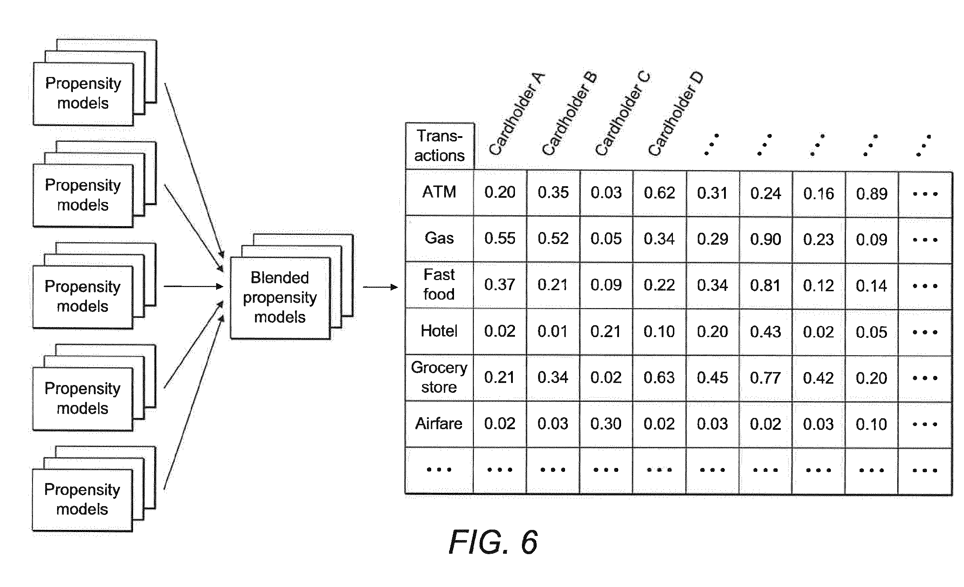

The score generation illustrated in FIG. 5 produces a propensity vector associated with each customer. These propensity vectors would then be sent to a production scoring system. The real-time data stream can be used in the operational system to allow the propensities to be used in conjunction with more recent transactions made in the stream (and not available to the batch update system), to inform the fraud system of the real-time propensity scores. The scores can also be used in conjunction with a fraud score so as to adjust the fraud score based on whether the customer would have likely made that transaction based on a deeper understanding of their transaction history in batch. FIG. 6 illustrates an exemplary set of propensity vectors. Such deep analysis of the customer transaction history is not possible in the 1s to 10s of millisecond response times required by conventional fraud detection systems, and therefore these propensity vectors provide a unique and new detailed view of the individual customer to allow a reduction in false positives. These propensity vectors are then utilized in the fraud scoring system represented in FIG. 2.

The development or building of propensity models requires a few different considerations: A propensity target needs to be defined which includes a time-window for the prediction window, such as, for example, whether a purchase would be made in the next week in the merchant category code of restaurants, outside local area, for dollar amount greater than $200. Further, relevant variables for the batch propensity models need to be defined, which requires exhaustive mining of the transaction history to determine the appropriate mix of variables to support high-performing propensity models for the targets defined above.

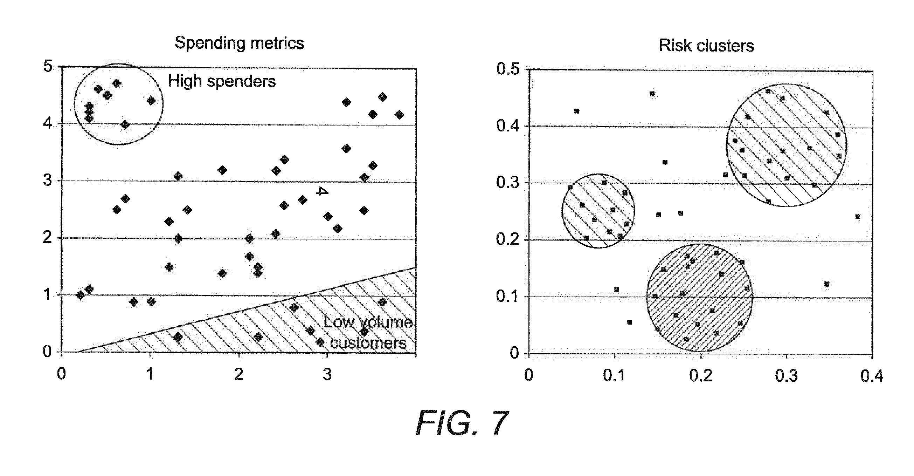

Finally, relevant sub-populations, or segmentation for the propensity models, need to be developed. For example, sub-populations can include segments of early life, mature customers, high spend customers, risky spend customers, etc. Different models, each with its own variables, can be built for each customers' segment / subpopulation. The segmentation can either be static, or dynamic to be performed at the time of scoring the batch propensity vectors, as illustrated in FIG. 7.

Once these considerations are resolved, then the batch propensity models are built based for different sub-populations of cardholders. In some exemplary implementations, these can be calculated as follows:

First, a logistic regression model is trained (on the general population) to create a propensity of Cardholder X ($p_j(x)$) having a transaction in a specified subcategory j:

$$logit\big(p_j(x)\big) = \alpha_0 + \Sigma_i \alpha_i \cdot v_i(x)$$

where $v_i$ represents an input variable vector associated with Cardholder X's transaction history and $\alpha_i$ are the coeffcients to be determined by the training algorithm. The input variables reflect different dimensionalities which make the individual cardholder unique. In particular, frequency of specific transactions, recency of specific transactions, and cyclical behaviors are captured by these input variables, among other transactional traits. For example, the models can incorporate data representing that a specific cardholder purchases groceries only once per week (and never more), always purchases fast food on Monday nights, makes 2-3 fast food purchases a week, purchases gas every fifth day or so, or recently purchased an airline ticket, and thus has a higher propensity of spending in restaurants in the next week, etc.

After weights $a_i$ are fitted by the training algorithm, the propensity score of each Cardholder X in the category j, is computed as:

$$p_j(x) = \frac{1}{1+e^{-logit\big(p_j(x)\big)}} = \frac{1}{1+e^{-\big(\alpha_0+\Sigma_i\alpha_i\cdot v_i(x)\big)}}$$

To further improve the propensity score for the purposes of fraud prediction, a separate logistic regression model is trained on each of the sub-populations of cardholders for each of the same spending categories j . This sub-population propensity score, denoted as $q_j$, is modeled and calculated in the same way as $p_j$ (but using only the observations that belong to the sub-population):

$$logit\big(q_j(x)\big) = \alpha_0 + \Sigma_i \alpha_i \cdot v_i(x)$$

$$q_j(x) = \frac{1}{1+e^{-logit\big(q_j(x)\big)}} = \frac{1}{1+e^{-\big(\alpha_0+\Sigma_i\alpha_i\cdot v_i(x)\big)}}$$

The sub-population propensity score can be computed for each cardholder, and represents the likelihood of a customer X transacting in subcategory j given that X is a member of the cardholder subpopulation Q.

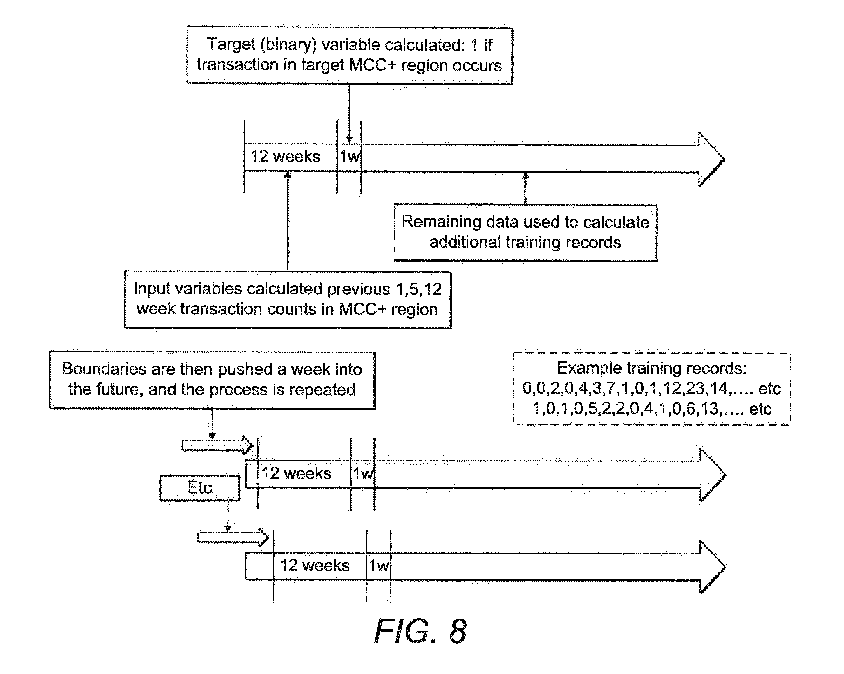

FIG. 8, shows an example of how customer transation data is utilized to construct general population and subpopulation propensity models, through using historical data over different time scales -- I week, 5 weeks, and 12 weeks, in the example above -- and then the performance window -- in this example 1 week in the future -- to determine whether the customer made the transaction. Historical data is used in this fashion to generate variables and target labels on which the general population and subcategory population propensity models are trained.

Once such propensity models are constructed, a variety of propensity-based quantities can be constructed and used by blending the propensity that a customer would have made the transaction observed with the base fraud score in real-time in the operational system. For example, general population and subcategory propensities can be combined through a ratio, which we call propensity ratio, $r_j(x)$ of Cardholder X in subcategory j, which is computed by taking the ratio of the general and sub-population propensity scores:

$$r_j(x) = \frac{p_j(x)}{\sum q_j(x) * c_{jq}}$$

where summation in the denominator is done over different pre-defined nonoverlapping cardholder subpopulations for which propensity models have been built and coefficients $c_{jq}$ are determine by risk and transactional frequency associated with the given spending category and subpopulation.

Finally, a model (such as another logistic regression model) can be built to blend the fraud score with the vector of propensity scores to predict the fraud probability of a given transaction in category i made by Cardholder X. For this model, we do linear blending in logodds space and choose a transformation of $r_j(x)$ which shows best linear correlation with Fraud logodds

$$FraudLogOdds = \gamma \cdot LogOdds(FalconScore) - \sum_j \beta_{ji} \cdot \log\left(r_j(x)\right)$$

where the $\beta_{ji}$ terms represent weights (contributions) of propensity score associated with propensity category j (could be propensity scores, ratios, or other mathematical manipulation of the propensity scores) to probability of fraudulent transaction in category i that an authorization decision as to whether to allow the transaction to proceed can be made by the financial institution that issued the payment card, or device.

By using the propensity ratio for a transaction that may not be the same category for a transaction currently being scored, second or third (or etc.) order predictors can be included in the final score. For example, if a high dollar jewelry purchase begets purchasing a home, while purchasing a home begets home improvement purchases, etc. This second-order predictor - a high dollar jewelry purchase begetting home improvement purchases - can be better included in a combined model of individual propensities.

The coefficients from this final logistic regression model are the blend coefficients used to produce the final blended fraud prediction score for each transaction:

$$BlendedFraudScore = \frac{1000}{1 + e^{(\gamma \cdot LogOdds(FalconScore) - \sum_j \beta_{ji} \cdot \log(r_j(x)))}}$$

The propensities $r_j(x)$ (the propensity vector) are stored in the batch propensity vector database for each cardholder x and get updated periodically (e.g. weekly).

Experiments can show that the approach outlined above results in relative performance gains in fraud detected, of on average of approximately 25% for various MCC+in/out of home area regions, on top of conventional fraud scores. In addition to the periodic batch updates to the propensity scores for each individual cardholder and the model weights, real-time updates to the propensity vectors for each individual cardholder can also be used to allow in the stream for the most accurate estimate of propensities. As an example, if a customer has a large propensity of transacting in a jewelry store and makes a purchase at a jewelry store on a Monday after the batch update of the propensity vector, he/she might have a much lower propensity to make a second or third transaction that week, and so the propensity associated with the jewelry transactions for the rest of the week would need to be modified in the stream between the batch propensity vector updates.

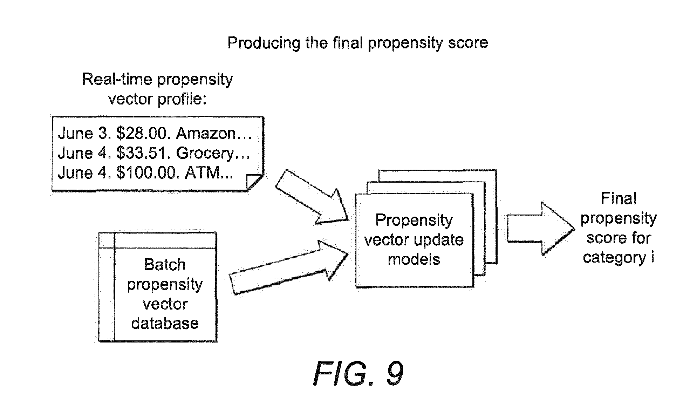

FIG. 9 illustrates a system 900 to handle these updates. For each customer, a real-time propensity vector is constructed which stores transaction detail made between the batch propensity vector updates. This can then be used to scan the near-term transaction history between batch updates to determine if the high propensity transaction has already occurred earlier in the week and to adjust, ignore, or improve the batch propensity score.

There are various ways to adjust the batch propensity based on a near-term transaction history within the scope of this disclosure, but in some implementations, a set of models for each category is used to adjust the score based on subsequent transactions in the stream. An alternative, simpler, approach is to ignore the propensity score if the predicted transaction has already occurred, or if the propensity score is weak, so there is not a high propensity score, and to not utilize the scores at all for that type of category and not supplement the fraud model whatsoever.

For example: a cardholder may have a high propensity to transact at a grocery store in the upcoming week, but a very low propensity to transact at a grocery store more than once in the upcoming week. By utilizing the real-time propensity vector profile, the final propensity score for each transaction would more be more accurate than simply utilizing the same propensity score across all grocery store transactions and not reflecting any transactions that occur in the transaction stream between batch propensity vector database updates.

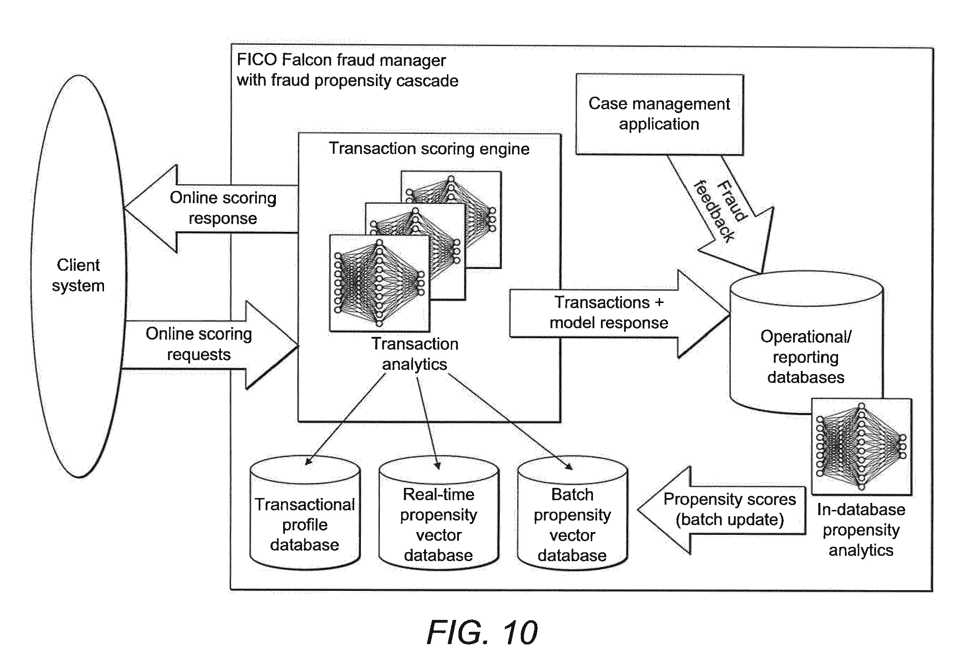

FIG. 10 illustrates a system that includes both the batch propensity vector computation, and the real-time propensity vector profile which will inform the model in the stream of near-term transactions that occurred between batch updates for the customer that allows the propensities in the transaction category associated with the current transaction to be adjusted. This entire system allows deep inspection of the customer spending and what they are likely to legitimately spend on to help inform the fraud detection system and considerably reduce the false positives and customer impact.

Transaction categories can be defined by other merchant transaction attributes generating a multitude of different propensity scores. Customer segmentation can be utilized to create different propensity scores, and which can then be combined into a single propensity ratio. Further, customers' batch propensity scores can be adjusted in real-time in the stream through a customer transaction profile to reflect most recent purchase behavior and further improve the accuracy of propensity scores between batch propensity updates.

One or more aspects or features of the subject matter described herein can be realized in digital electronic circuitry, integrated circuitry, specially designed application specific integrated circuits (ASICs), field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example as would a processor cache or other random access memory associated with one or more physical processor cores.

To provide for interaction with a user, one or more aspects or features of the subject matter described herein can be implemented on a computer having a display device, such as for example a cathode ray tube (CRT), a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including, but not limited to, acoustic, speech, or tactile input. Other possible input devices include, but are not limited to, touch screens or other touch-sensitive devices such as single or multi-point resistive or capacitive trackpads, voice recognition hardware and software, optical scanners, optical pointers, digital image capture devices and associated interpretation software, and the like.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. Other implementations may be within the scope of the following claims.

**Claims**

1. A method comprising:

   computing a probability estimate of spending by a consumer in a merchant transaction category based on historical transaction data and consumer profile data;
   generating a propensity score for the merchant transaction category based on the probability estimates of spending by the consumer, the propensity score representing a propensity for the consumer to conduct a merchant transaction in a set of spending categories;
   combining the propensity score in a fraud model operating in a real-time transaction stream, the fraud model generating a fraud score; and
   adjusting the fraud score in accordance with the propensity score, the fraud score representing a relative likelihood that the merchant transaction by the consumer is fraudulent.

2. The method in accordance with claim 1, wherein adjusting the fraud score further comprises reducing the fraud score if the propensity score is high.

3. The method in accordance with claim 2, wherein adjusting the fraud score further comprises increasing the fraud score if the propensity score is low.

4. The method in accordance with claim 1, wherein the merchant transaction data includes merchant category code (MCC) data of a merchant category associated with the customer's merchant transaction.

5. The method in accordance with claim 1, wherein the merchant transaction data includes merchant category code (MCC) data of a merchant category not related with the merchant transaction.

6. The method in accordance with claim 1, wherein the consumer profile data includes historical spending data by the consumer.

7. The method in accordance with claim 1, further comprising weighting the propensity score contribution to the fraud model based on a trained model such as logistic regression model.

8. The method in accordance with claim 1, wherein the merchant transaction category is defined by one or more merchant transaction attributes, each of the one or more transaction attributes generating a unique propensity score.

9. The method in accordance with claim 1, further comprising:

   segmenting the consumer into each of a plurality of consumer segments, each of the plurality of consumer segments being used to generate a unique propensity score; and
   combining the unique propensity scores into a single propensity ratio.

10. A computer program product comprising a machine-readable medium storing instructions that, when executed by at least one programmable processor, cause the at least one programmable processor to perform operations according to the method of any preceding claim.

11. A system comprising:

    at least one programmable processor; and
    a machine-readable medium storing instructions that, when executed by the at least one processor, cause the at least one programmable processor to perform operations according to the method of any of claims 1 to 9.

102 — Transaction

104

Card profile

106 — Card feature detectors

108 — Updated card profile

Card profile store

110

Neutral network

112

114 — Fraud score

100

FIG. 1

FIG. 2

*306*

*308*

Transaction

Propensity update matrix model

*310*

Propensity score

*304*

Real time propensity vector profiles

Batch propensity vector database

*302*

*FIG. 3*

Example model construction

FIG. 4

FIG. 5

| Trans-actions | Cardholder A | Cardholder B | Cardholder C | Cardholder D | ∴ | ∴ | ∴ | ∴ | ∴ |
|---|---|---|---|---|---|---|---|---|---|
| ATM | 0.20 | 0.35 | 0.03 | 0.62 | 0.31 | 0.24 | 0.16 | 0.89 | ... |
| Gas | 0.55 | 0.52 | 0.05 | 0.34 | 0.29 | 0.90 | 0.23 | 0.09 | ... |
| Fast food | 0.37 | 0.21 | 0.09 | 0.22 | 0.34 | 0.81 | 0.12 | 0.14 | ... |
| Hotel | 0.02 | 0.01 | 0.21 | 0.10 | 0.20 | 0.43 | 0.02 | 0.05 | ... |
| Grocery store | 0.21 | 0.34 | 0.02 | 0.63 | 0.45 | 0.77 | 0.42 | 0.20 | ... |
| Airfare | 0.02 | 0.03 | 0.30 | 0.02 | 0.03 | 0.02 | 0.03 | 0.10 | ... |
| ... | ... | ... | ... | ... | ... | ... | ... | ... | ... |

*FIG. 6*

EP 2 790 146 A1

FIG. 7

FIG. 8

Producing the final propensity score

Real-time propensity
vector profile:

June 3. $28.00. Amazon...
June 4. $33.51. Grocery...
June 4. $100.00. ATM...

Batch
propensity
vector
database

Propensity
vector update
models

Final
propensity
score for
category i

*FIG. 9*

*FIG. 10*

Europäisches
Patentamt

European
Patent Office

Office européen
des brevets

# EUROPEAN SEARCH REPORT

**Application Number**

EP 14 16 4286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/036036 A1 (ZOLDI SCOTT M [US]) 7 February 2013 (2013-02-07) * the whole document * ----- | 1-11 | INV. G06Q20/40 |
| X | US 2013/018795 A1 (KOLHATKAR JAYASHREE S [US] ET AL) 17 January 2013 (2013-01-17) * the whole document * ----- | 1-11 | |
| X | US 2009/222369 A1 (ZOLDI SCOTT [US] ET AL) 3 September 2009 (2009-09-03) * the whole document * ----- | 1-11 | |
| X | US 7 707 089 B1 (BARTON THOMAS C [US] ET AL) 27 April 2010 (2010-04-27) * the whole document * ----- | 1-11 | |

| | |
|---|---|
| | TECHNICAL FIELDS SEARCHED (IPC) |
| | G06Q |

The present search report has been drawn up for all claims

| Place of search | Date of completion of the search | Examiner |
|---|---|---|
| The Hague | 2 September 2014 | Van Dop, Erik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 16 4286

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2014

| Patent document cited in search report | | Publication date | Patent family member(s) | | Publication date |
|---|---|---|---|---|---|
| US 2013036036 | A1 | 07-02-2013 | AU 2012290035 A1<br>US 2013036036 A1<br>WO 2013019995 A1 | | 20-03-2014<br>07-02-2013<br>07-02-2013 |
| US 2013018795 | A1 | 17-01-2013 | NONE | | |
| US 2009222369 | A1 | 03-09-2009 | NONE | | |
| US 7707089 | B1 | 27-04-2010 | US 7707089 B1<br>US 8032438 B1 | | 27-04-2010<br>04-10-2011 |

EPO FORM P0459

For more details about this annex : see Official Journal of the European Patent Office, No. 12/82